# EUROPEAN PATENT APPLICATION

(11) **EP 1 717 264 A1**
(43) Date of publication of application: **02.11.2006**
(21) Application number: 05447094.3
(22) Date of filing: 29.04.2005
(51) Int. Cl.: C08J 3/22, B29C 47/10

(54) **Process for producing a polyamide and/or polyester composition comprising nanoclay**

(71) Applicant: Campine, 2340 Beerse (BE)
(72) Inventor: Dittmann, Benjamin, 2500 Lier (BE); Cuypers, Bart, 2460 Kasterlee (BE)
(74) Representative: Luys, Marie-José A.H.

(57) **Abstract**

The present invention relates to a process for manufacturing a nanocomposite masterbatch comprising an amount of at least one thermoplastic matrix polymer material and an amount of platelets of a phyllosilicate material dispersed within the thermoplastic matrix polymer material, the process comprising the steps of feeding the at least one thermoplastic matrix polymer material and the phyllosilicate material to a suitable continuous kneading and extruding apparatus, melt-kneading the masterbatch components in the apparatus and granulating the melt-kneaded masterbatch material. Feeding of the components to the apparatus is performed by at least a first inlet and a second inlet positioned downstream from the first, whereby from 0-100 wt.% of the total mass of thermoplastic matrix polymer material and from 0-90 wt.%t of the total mass of phyllosilicate material are fed to the apparatus through the first inlet, the remaining being fed to the apparatus through the second inlet.

## Description

The present invention relates to a process for manufacturing a nanocomposite masterbatch comprising an amount of at least one thermoplastic matrix polymer material and an amount of platelets of a phyllosilicate material dispersed within the thermoplastic matrix polymer material, the process comprising the steps of feeding the at least one matrix polymer material and the phyllosilicate material to a suitable continuous kneading and extruding apparatus, melt-kneading the masterbatch components in the apparatus and granulating the melt-kneaded masterbatch material, according to the preamble of the first claim.

Composite materials comprising so-called nanoclays exist and are for example disclosed in US-A-5.760.121 discloses molding compositions comprising a thermoplastic or a thermosetting polymer and an amount of platelets obtained from exfoliation of intercalated phyllosilicates. US-B-6.376.591 discloses amorphous high barrier matrix polyamides showing a good resistance to haze formation, crystallisation and other defect formation in the presence of dispersed and/or exfoliated organically modified clays when undergoing orientation processing steps. It has however been observed that the mechanical and high temperature resistance properties of composite materials obtained by direct mixing of nanoclay into a thermoplastic material, are insufficient compared by composites produced with nanoclay masterbatches.

Phyllosilicates, for example smectite clays, in particular montmorillonite, have been rendered suitable for use in composite materials by subjecting the material to treatments for reducing the particle size and separating the platelet particles prior to incorporation into the polymer. On possible treatment includes subjecting the clay material to an intercalating treatment with the purpose of increasing the interlayer spacing to about 5 to 100 A, followed by an exfoliation step to mechanically separate the silicate layers. The nature of the intercalant composition is chosen such that it is has a good affinity for the phyllosilicate so that it is sorbed between and maintained associated with the silicate platelets in the interlayer spaces and after exfoliation. Depending on the nature of the intercalant composition the use of a spacing or coupling agent may be required to maintain the intercalation distance. Nanocomposite materials comprising individual silicate layers mixed with a matrix or a host polymer, have been found to exhibit e.g. improved barrier proprerties, mechanical strength and high temperature characteristics. A process for producing intercalated clay materials is for example disclosed in US-A-5.760.121, US-A-5.804.613 and US-A-6.251.980.

However, when compounding the platelets of clay material with a composition comprising a thermoplastic resin, the dispersibility and exfoliation of the intercalated clay appears to be insufficiently homogeneous, which results in less explicit mechanical and high temperature resistance properties of the composite material obtained therefrom than can be expected from such nanoclays. Moreover, usually the clay material is supplied as a powder with a small particle size, and as such is a health hazard.

There is thus a need to a composition comprising an amount of a thermoplastic matrix polymer material and platelets of a clay material, with which composite materials may be produced showing improved mechanical properties.

It is therefore the object of the present invention to provide a process for producing a composition comprising an amount of a clay material with which composite materials may be produced showing improved mechanical properties.

This is achieved according to the present invention with a process showing the technical features of the characterizing part of the first claim.

Thereto, the process of this invention comprises the steps of feeding the components to the apparatus, wherein feeding of the components to the apparatus is performed by at least a first inlet and a second inlet positioned downstream from the first, whereby from 10-100 parts by weight of the total mass of thermoplastic matrix polymer material and from 0-100 wt. % of the total mass of phyllosilicate material are fed to the apparatus through the first inlet, the remaining being fed to the apparatus through the second inlet.

By adding the at least one thermoplastic matrix polymer material and the phyllosilicate material to the continuous kneading apparatus in the indicated manner, or in other words by always feeding them through at least two inlets, with the proviso that at least some of the thermoplastic matrix polymer is fed to the apparatus together with the phyllosilicate through the second inlet, a significantly improved exfoliation of the phyllosilicate may be achieved and a remarkably improved dispersion of the clay particles in the resin matrix. The inventors have observed that with the process of this invention optimum exfoliation and dispersion of the clay within the thermoplastic matrix polymer may be achieved which is such that platelets of phyllosilicate are received within the network of the polymer.

The inventors have particularly found that with the process of this invention the phyllosilicate material is subjected to such a shear that a sufficiently complete exfoliation of the phyllosilicate may be achieved. In particular, the exfoliation obtained appears to be such that a virtually homogeneous dispersion of the platelet particles of phyllosilicate in the polymeric matrix may be attained. The upper limit for the shear rate is not critical provided that the shear rate is sufficiently low to minimise the risk to physical degradation of the matrix polymer. In particular, the shear rate preferably ranges from about 10 sec⁻¹ to about 20.000 sec⁻¹, more preferably between about 100 sec⁻¹ and about 10.000 sec⁻¹. The person skilled in the art will be capable of adjusting the process parameters such that optimum exfoliation of the phyllosilicate is achieved. The platelet particles dispersed in matrix polymer material will often have the thickness of the individual layers, or of a small number of associated layers. With the method of this invention it may be achieved that the majority, often substantially all individual layers delaminate one from the other to form separate platelet particles. This is important as in that way mechanical properties and high temperature resistance properties of a product containing or produced from the masterbatch of this invention may be optimised.

Also, with the process of the present invention it has for the first time become possible to raise the phyllosilicate content of the masterbatch to a concentration up to a level of 35-75 wt. %, preferably of 40 - 60 wt. % with respect to the total weight of the masterbatch. Lower levels of phyllosilicate in the masterbatch will adversely affect their commercial feasibility, higher levels will result in a deteriorating degree of dispersion, will increase the brittleness of the masterbatch pellets and involve excessive temperature increase and thus a risk to matrix polymer degradation when producing the masterbatch. The inventor has further observed that composite products produced from the masterbatch of this invention show improved mechanical properties and surface characteristics as compared to the known products obtained from direct incorporation of phyllosilicate. The process of this invention and the masterbatch obtained therewith present the additional advantage that a reproducible dispersion of the phyllosilicate in the matrix resin may be achieved, thus keeping quality of the products constant in time.

According to a preferred embodiment of the invention, from 0- 100wt.% of the total mass of the matrix polymer material and from 0-20wt.% of the total mass of the phyllosilicate material are fed to the apparatus through the first inlet, the remaining being fed to the the apparatus through the second inlet. By maintaining the phyllosilicate material concentration in the masterbatch in the range of 40-60 wt.% of the total masterbatch, the risk to the formation of extruded or molded products with a too high brittleness upon incorporation of the masterbatch may be minimised.

The present invention also relates to a composite material containing the nanocomposite masterbatch of this invention. The composite material is obtained by first melt kneading the matrix polymer material with an elevated content of phyllosilicate according to the process of the invention, followed by melt kneading the thus obtained masterbatch with an additional amount of a matrix polymer material. The composite material is prepared by the usual processing techniques known in the art, such as for example, mixing the matrix polymer material and the masterbatch in the molten state, and if appropriate with one or more flame retardants and/or additives, in the desired weight ratios, kneading the mixture and granulating it into granules. The granules may be stored and processed into shaped articles at a later stage. Suitable mixing devices include screw machines, such as single- and twin-screw extruders, blade kneaders and/or special kneaders, such as for example, Buss^{™} kneader, and/or injection moulding machines.

By feeding an increasing amount of matrix polymer material through the second inlet together with the intercalated clay, dispersion of the clay within the thermoplastic matrix polymer may be further improved.

It is to be understood that to carry out the process according to the invention, more than two inlets may be employed in the kneading apparatus. Additional inlets may for instance, be used to feed the additional above-mentioned additives to the mixture. These however may also be fed through the first and second inlet, together and/or separately from the principal component of the thermoplastic matrix polymer material and the intercalated clay.

According to the invention any suitable inlet known in the art may be employed. The thermoplastic matrix polymer material and/or the phyllosilicate may be to the apparatus by using a side inlet with spiralling screw. However it has advantages to feed at least the thermoplastic matrix polymer material and/or the phyllosilicate to the apparatus by using a top inlet with spiralling screw, as an improved dosing and simplified process is provided. Such inlets are known per se and are for instance described by Coperion. By employing top inlets with spiralling screws, it has been observed that processing speed, i.e. the amount of phyllosilicate added per unit of time, may be higher than hitherto achieved, without adversely affecting dispersion quality.

A particularly preferred continuous kneading and extruding apparatus for carrying out the process for manufacturing the masterbatch comprises a housing provided at its inner side with protrusions, which cooperate with a rotating and simultaneously axially reciprocating kneading shaft with screw flights separated by gaps. Housing and/or kneading shaft are provided with heating and/or cooling arrangement. Such an apparatus is known per se, and is for instance described in GB-979,364 and GB-1,029,601, both of which are incorporated herein by reference. During mixing and kneading in the preferred apparatus, the components are subject to changes in specific volume, for example a compaction. The conveying screw is adapted to convey the material efficiently where the material has its maximum specific volume, usually near the inlet to the housing. At other locations along the interior of the housing the efficiency of the conveying screw is preferably improved by using elements for closing some of the gaps (so-called "Stauringen"), and advantageously these elements are fitted or removed according to requirements. The housing is provided with internal projections, which preferably are accommodated by the said gaps and may be removed at locations where the gaps have been substantially closed. At the downstream end of the housing, the apparatus is usually provided with a discharge worm situated in its own housing, which may extend coaxially with the housing of the kneading screw, but preferably extends substantially perpendicular to the axis of the kneading screw housing. The discharge worm housing is provided with an end face plate with one or several die openings. The masterbatch material worked by the kneading screw is conveyed to the discharge worm, which delivers it in a more or less uniform flow through the die openings in the end face plate, where after the exiting strands of material are granulated.

Length to diameter (L/D) ratios employed in the process of the invention vary according to the component materials used, the phyllosilicate content in the masterbatch, the additives used, and the desired output rate. A preferred L/D ratio is selected between 11 - 50, more preferred between 12 - 50, particularly preferred between 15-50.

In the process of this invention good dispersion of the phyllosilicate, delamination of the platelets or in other words exfoliation of the phyllosilicate within the matrix resin is obtained by shear using mechanical means which cause portions of the melt to flow past other portions. Suitable mixing apparatus to carry out the process of the invention include all devices known in the art of polymer processing which is able to intimately mix the components. Preferably continuous kneaders such as single- and twin-screw extruders are used. Kneading of the components is carried out at a temperature at which the polyamide or polyester resin usually melts.

A particularly preferred process according to the invention employs a granulation step comprising cutting the melt-kneaded masterbatch material immediately upon exiting the apparatus, prior to cooling it. Although not well understood by the applicants, this technical measure apparently further improves dispersibility of the intercalated clay powder in the produced masterbatch.

A preferred granulation system to be used in the process according to the invention is hot face granulation and/or water ring granulation. These systems are commercially available, for example from Theysohn, Coperion, Leistritz, Buss, W&P. Generally, the molten mixture exits from the mixing apparatus of extruder type through a die, which extends substantially horizontal and ends up in a substantially vertical, and usually circular, end face plate of the mixing apparatus. In the centre of the face plate is provided a rotationally driven horizontal axis, onto which a plurality of arms, provided with knifes and extending perpendicular to the axis is attached. Upon rotation of the axis, the arms with knifes rotationally 'scan' the end face plate, whereby consecutive knifes pass over the die exit and cut the hot strand, exiting from the die. In hot face granulation, one excentric die exit is provided in the end face plate, such that the knifes cut the exiting strand from above. In water ring granulation a plurality of die exits is provided in the end face plate, usually arranged along a ring around the centre. With both systems, cutting of the strand into granules takes place when still hot, which is essential for this preferred embodiment of the invention. Through the centrifugal action of the knifes, the thus formed granules are flung onto a conical surface onto which a stream of water is running. Cooling of the granules is thus effected by a combination of air and water cooling.

Suitable thermoplastic matrix polymer materials for use in the process of this invention may vary widely as long as they are melt processible. Examples of suitable thermoplastic polymeric materials include polyolefines comprising lineair low density polyethylene (LLDPE), low density polyethylene (LDPE), high density polyethylene (HDPE), medium density polyethylene (MDPE), polypropylene (PP) and their copolymers. Also ethylene venyl acetate (EVA), ethylene butyl acrylate (EBA), ethylene methyl acrylate (EMA), polyamide 6, polyamide 6.6, polyamide 4.6, polyamide 11, polyamide 12, polybutylene therephtalate (PBT), polyethylene therephtalate, polycarbonate (PC), acrylonytrile butadiene styrene (ABS), polymethyle methacrylate (PMMA), polyoxymethylene, polystyrene (PS) and its copolymers (syndiotactic polystyrene or SPS included), styrene acrylonitryle (SAN), styrene butadiene copolymers (SB copolymers), thermoplastic polyurethanes (TPU), maleic anhydride grafted polymers, ionomers, all thermoplastic elastomers and all combinations of 2 or more of the above polymers are suitable.

It has been observed that the process of the present invention is particularly suitable for producing masterbatches of polyamide, polyamide copolymer or polyester resins or mixtures thereof, as a particular homogeneous distribution of highly exfoliated phyllosilicate material may be achieved.

Suitable polyamide, polyamide copolymer or polyester resins or mixtures thereof for producing the masterbatch include polymers obtained by polycondensing diamines, such as hexamethylene diamine and a dicarboxylic acid. These polyamides are obtained, for example, by polymerization of a lactam or an amino acid or by polycondensation of a diamine and a dicarboxylic acid. Examples of suitable polyamides are for example, those which are obtained by polymerization of ε-caprolactam, aminocaproic acid, 7-aminoheptanoic acid, 11-aminoundecanoic acid, 9-aminononanoic acid and α-pyrrolidone or α-piperidone, or polymers which are obtained by polycondensation of a diamine, such as, for example, hexamethylenediamine, nonamethylenediamine, undecamethylene-diamine, dodecamethylenediamine and m-xylylenediamine, with a dicarboxylic acid, such as terephthalic acid, isophthalic acid, adipic acid, sebacic acid, a dibasic dodecanoic acid and glutaric acid, or by copolymerization thereof. These are, for example, poly-ε-caprolactam (nylon 6), polyhexamethyleneadipic acid amide (nylon 6/6), polyhexamethyleneazelaic acid amide (nylon 6/9), polyhexamethylenesebacic acid(nylon 6/10), polyhexamethylenedodecanedioic acid amide (nylon 6/12), polypyrrolidone (nylon 4), polycaprylolactam (nylon 8), poly(ω-aminoundecanoic acid) (nylon 11), poly(w-dodecanelactam) (nylon 12) and copolyamides and terpolyamides thereof, such as, for example, nylon 6/66, nylon 6/12, nylon 6/6T, where T is terephthalic acid, nylon 66/BAC 6, where BAC is 1,3- or 1,4-bis-aminocyclohexane, nylon 6/66/12 and nylon 6/610/PACM10, where PACM is 4,4'-diaminodicyclohexylmethane.

Preferred polyamides are nylon 6, nylon 6/6, nylon 6/10, nylon 6/12, nylon 11 and nylon 12. Nylon 6 and nylon 6/6 are particularly preferred. Suitable polyamides for preparing the masterbatch according to the invention have a relative viscosity in sulphuric acid according to ISO 307 of between 2,0 - 5,0, preferably between 2,0 - 3,0, more preferably between 2,2 - 2,4.

Suitable polyester resins to be used in the masterbatch and/or resin composition according to the invention include all amorphous and/or crystalline polyesters of diols and/or diphenols, and an organic acid, such as those build from at least one aromatic and/or aliphatic carboxylic diacid with 8-14 carbon atoms, and at least one diol. Particularly suitable polyesters are polyalkylene terephtalates, in particular polyethylene terephtalate (PET) and/or polybutylene terephtalate (PBT). Suitable polyesters include the group of {PRIVATE }polycarbonates, and if so desired mixtures of polycarbonates and, for instance, PET and/or PBT.

The masterbatch and/or resin composition may also comprise a mixture of two or more polyamides or copolymers thereof.

The masterbatch and/or resin composition may further comprise additional resins, such as, for example, polyesters, polyolefins, ABS, acrylate/ acrylonitrile/styrene/ethylene/vinyl acetate copolymers, EPDM rubber and/or other rubbers, as well as ionomers (such as Dupont Surlyn^{™}), and/or maleic anhydride (grafted) polymers (such as Fusabond^{™} from Dupont). Maleic anhydride (grafted) polymers are particularly preferred.

The clay materials suitable for use in the present invention are an agglomeration of individual platelet units closely stacked together, which may be separated from each other, or in other words may be exfoliated with the process of this invention, so that the individual platelets may be received within the matrix of the matrix polymer material. Usually they are free flowing, dry powders, having a suitable cation exchange capacity as is for example disclosed in US-B-6.376.591 which is herewith incorporated by reference.

Suitable clay materials for use with the present invention include refined but unmodified clays, modified clays or mixtures of modified and unmodified, clays. Suitable clay materials include natural, synthetic and modified phyllosilicates, for example smectite clay minerals, for example montmorillonite, in particular sodium, magnesium and/or calcium montmorillonite; nontronite; beidellite; volkonskoite; hectorite; saponite; sauconite; sobockite; stevensite; svinfordite; vermiculite; and the like and mixtures of two or more of those. Other useful layered materials include micaceous minerals, for example illite, mixed layered illite/smectite minerals, such as ledikite and mixtures of two or more of those. Suitable clay materials are commercially available from Nanocor Inc., Southern Clay Products and others. ln the present patent application all of the afore mentioned materials have been named "phyllosicilates".

Preferred phyllosilicate materials are phyllosilicates of the 2:1 type having a negative charge on the layers ranging from about 0.15 to about 0.9 charges per formula unit and a commensurate number of exchangeable metal cations in the interlayer spaces. The most preferred layered materials are smectite clay minerals, montmorillonite being particularly preferred.

Mostly it will be desirable to subjected the phyllosilicate to a pre-treatment to facilitate separation of the agglomerates of platelet particles to individual platelet particles and small tactoids. Separating the platelet particles prior to incorporation into the polymer has been found to improve the polymer/platelet interface. Any treatment that achieves the above goals may be used.

An example of such a pretreated phyllosilicate material is an intercalated layered phyllosilicate material prepared by reacting a swellable layered phyllosilicate with an organic cation, preferably an ammonium compound to effect partial or complete cation exchange. If desired, two or more organic cations may be used to treat a clay. Organic cations used to intercalate a clay material or a mixture of clay materials of the masterbatch of this invention are preferably derived from organic cation salts, preferably onium salt compounds.

The phyllosilicate may be subjected to further pretreatments for the purposes of facilitating exfoliation in the masterbatch and/or improving the affinity for the matrix polymer surface. Any treatment that achieves the above goals may be used. Examples of treatments include intercalation with water-soluble or water-insoluble polymers, organic reagents or monomers, silane compounds, metals or organometallics, and/or their combinations. Treatment of the clay can be accomplished prior to the addition of a polyamide to the clay material mixture, during the dispersion of the phyllosilicate with the polyamide or during a subsequent melt blending or melt fabrication step.

Examples of useful pretreatment with polymers and oligomers include polyvinyl pyrrolidone, polyvinyl alcohol, polyethylene glycol, polytetrahydrofuran, polystyrene, polycaprolactone, certain water-dispersible polyesters, Nylon-6 and the like. Examples of useful pretreatment with organic reagents and monomers include those disclosed in EP-A- 780.340, incorporated herein by reference. Examples of useful organic reagents and monomers for intercalating the swellable layered clay include dodecylpyrrolidone, caprolactone, caprolactam, ethylene carbonate, ethylene glycol, bishydroxyethyl terephthalate, dimethyl terephthalate, and the like or mixtures thereof.

Examples of useful pretreatment with silane compounds include those treatments disclosed in WO 93/11190, incorporated herein by reference. Examples of useful silane compounds includes (3-glycidoxypropyl)trimethoxysilane, 2-methoxy(polyethyleneoxy)propyl heptamethyl trisiloxane, octadecyl dimethyl (3-trimethoxysilylpropyl)ammonium chloride and the like.

Other examples of useful pretreatments include a pre-treatment with a suitable water-soluble or water-insoluble intercalant polymer, for example those disclosed in US-A-5.760.121 which is hereby incorporated by reference. Suitable water-insoluble intercalant polymers include polyolefin polymers and copolymers based on ethylene, propylene and other alphaolefin monomers; polycarbonimides (polymers and copolymers) polycarbonates (polymers and copolymers) polyamides (polymers and copolymers); polyethers (polymers and copolymers); polyesters; polycarbonates; polyurethanes; polyepoxides; polyolefins; polyalkylamides. Suitable water-soluble intercalants include those which are disclosed in US-A-5.760.121 which is hereby incorporated by reference, for example polymeric polyols and polyhydric alcohols, such as polysaccharides. Suitable water-soluble intercalant polymers include polyvinylpyrrolidone (PVP) or its alkali salts, polyvinylalcohol (PVA), polyacrylic polymers and copolymers and their salts and derivatives, substituted polyacrylic acids, polyacrylamide and copolymers thereof acrylamide, acrylate/acrylamide copolymers, acrylates and copolymers of acrylic acid and salts thereof, acrylic/acrylate copolymers, melamine/formaldehyde resin, polyethyleneimines, polyacrylic acid, polyvinyl alcohol water-soluble esters and ethers of cellulose; copolymers of starch with onre or both of acrylate and acrylamide; urea/formaldehyde prepolymers; urea/melamine/formaldehyde prepolymers; vinyl acetate/crotonic acid copolymers; and vinyl alcohol copolymers.

Usually after the pre-treatment, the clay material will be dried before being used in the process of this invention.

If so desired, the process of the present invention may include the step of adding a dispersing agent and/or a lubricant to the phyllosilicate material, or the matrix resin or to the mixture of them prior to or during the production of the masterbatch by melt mixing, to facilitate exfoliation of the treated or untreated swellable layered particles into the matrix polymer. These dispersing aids are generally known to the person skilled in the art and include fatty alcohols and their dicarboxylic acid esters, fatty acid esters of short-chain alcohols, fatty acids, fatty acid amides, metal soaps, oligomeric fatty acid esters (fatty acid complex esters), fatty acid esters of long-chain alcohols, montan waxes, polar polyethylene waxes, polar polypropylene waxes, non-polar polyethylene waxes, polypropyle waxes, natural and synthetic paraffin waxes, fluoropolymers, ionomers, polysiloxanes and all possible combinations of two or more of these products. It is however preferred to keep the amount of dispersing agent as small as possible, but sufficient to achieve optimum dispersion. Thereto, the amount of dispersing agent added will be less than 10 wt. % with respect to the total weight of the composition, preferably less than 5 wt. %, often about 0.5-2 wt. %.

When desired, the masterbatch may contain additives which are commonly used with polymers, for example flame retardant agents, nucleating agents, fillers, plasticizers, impact modifiers, chain extenders, plasticizers, colorants, mold release agents, lubricants, antistatic agents, pigments, fire retardants, and the like. The appropriate amounts are well known to those skilled in the art.

Dispersing into a matrix polymer the above-described nanoscale platelet particles with the process of the present invention has been found to positively affect essential properties of the thus obtained composition as well essential properties of a composite produced from the masterbatch obtained with the process of this invention. The inventors have observed that in a composite product containing the masterbatch obtainable with the process of this invention, the amount of fibrous reinforcing material may be reduced without adversely affecting the mechanical properties of the composite material. Typically an increase in tensile modulus and ultimate tensile strength or an increase in ultimate impact resistance or glass transition temperature (Tg) has been found. Reducing the content of fibrous reinforcing material may result in an improved processibility of the masterbatch, and improved surface properties such as improved scratch resistance and surface smoothness. The inventors have further found that a product produced from the masterbatch obtainable with the method of this invention shows improved barrier properties for several gases, a higher stiffness and improved resistance against solvents and other chemicals. Finally, an important reduction of the weight of products containing the masterbatch of this invention may be achieved.

The present invention is further elucidated in the following example and comparative example.

### Example 1. Production of a nanocomposite masterbatch based on a polyamide resin according to the invention.

Nylon 6 was melt kneaded in a 27 mm twin screw extruder (manufactured by Leistritz) at a temperature, ranging from 255°C to 245°C. A mixture containing a phyllosilicate, in particular a nanoclay type 1.30P obtained from Nanocor, and Nylon 6 were fed to the twin screw extruder according to the invention, and then granulated with a water ring granulation system. In this manner, Masterclay^{™} masterbatch pellets with a nanoclay content of about 5% by weight were obtained.

The enclosed photo shows that with the process of this invention a good dispersion and sufficiently complete exfoliation of the montmorillonite could be achieved.

From the thus obtained masterbatch pellets, a compound was produced on an single screw extruder from Axon. The compound contained about 10% by weight of masterbatch, relative to the total weight of the compound.

Test specimens according ASTM D 256 (ISO 180), ASTM D 256 (ISO 180) and ISO 527 were injection moulded on a 2.1 metric ton Battenfeld injection moulding machine under standard conditions.

The mechanical properties of the thus obtained moulded product were measured and are summarised in table 1 below.

From the enclosed photo it can be observed that a virtually complete exfoliation and a virtually homogeneous dispersion of the montomorillonite in the Nylon 6 could be achieved.

### Comparative Example A. Production of a composite material containing nanoclay.

Nylon 6 was melt kneaded in a 27 mm twin screw extruder (manufactured by Leistritz) at a temperature, ranging from 255°C to 245°C. 5 wt. % of a phyllosilicate, in particular a nanoclay type 1.30P obtained from Nanocor were fed to the twin screw extruder according to the invention.

Test specimens according ASTM D 256 (ISO 180), ASTM D 256 (ISO 180) and ISO 527 were injection moulded on a 2.1 metric ton Battenfeld injection moulding machine under standard conditions.

The mechanical properties of the thus obtained moulded product were measured and are summarised in table 1 below.

**Table 1.**

| | Tensile modulus MPA) | Heat (Deflection temperature (°C) | Izod notched impact (ft LB/in) | Izod unnotched impact (ft LB/in) |
|---|---|---|---|---|
| Example 1 (compound with masterbatch) | 4795 | 123 | 0.61 | 26 |
| Comparative Example A (compound with direct use of nanoclay) | 4521 | 118 | 0.54 | 22 |

The results in table 1 show that upon addition of an exfoliated montmorillonite, the tensile modulus of a composite material produced from a masterbatch of the present invention may be significantly improved as well as the heat deflection temperature and impact properties.

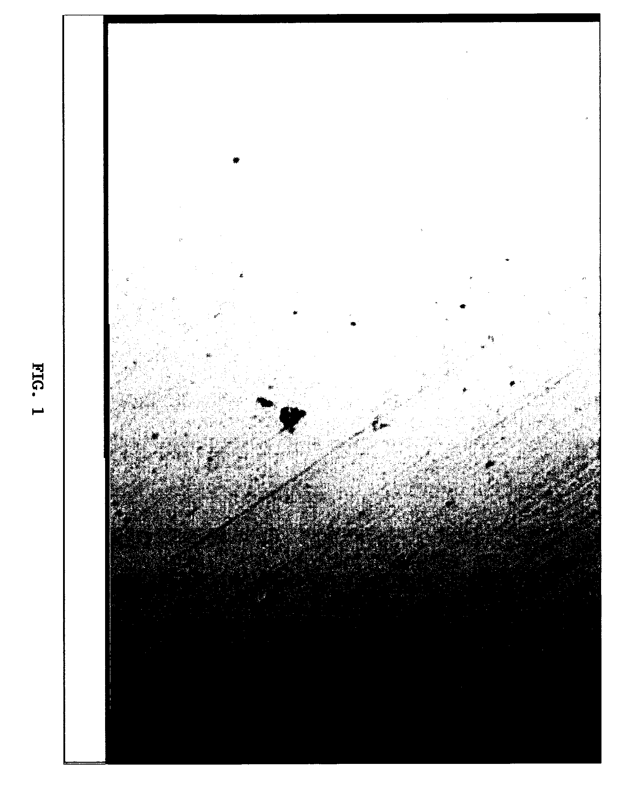

## Claims

1. A process for manufacturing a nanocomposite masterbatch comprising an amount of at least one thermoplastic matrix polymer material and an amount of platelets of a phyllosilicate material dispersed within the thermoplastic matrix polymer material, the process comprising the steps of feeding the at least one thermoplastic matrix polymer material and the phyllosilicate material to a suitable continuous kneading and extruding apparatus, melt-kneading the masterbatch components in the apparatus and granulating the melt-kneaded masterbatch material, **characterised in that** feeding of the components to the apparatus is performed by at least a first inlet and a second inlet positioned downstream from the first, whereby from 0-100 wt.% of the total mass of thermoplastic matrix polymer material and from 0-90 wt.% of the total mass of phyllosilicate material are fed to the apparatus through the first inlet, the remaining being fed to the apparatus through the second inlet.

2. A process as claimed in claim 1, **characterised in that** from 50-100 wt.%, preferably from 85-100wt.% of the total mass of the thermoplastic matrix polymer material and from 0-20wt.%, preferably from 0-10wt.% of the total mass of the phyllosilicate material are fed to the apparatus through the first inlet, the remaining being fed to the apparatus through the second inlet.

3. A process as claimed in claim 2, **characterised in that** feeding of at least the thermoplastic matrix polymer material and/or the phyllosilicate to the apparatus is performed by using a top inlet with a spiralling screw.

4. A process as claimed in any one of claims 1-3, **characterised in that** the melt-kneaded nanocomposite masterbatch material is subjected to a cutting action immediately upon leaving the continuous kneading and extruding apparatus to effectuate granulation, prior to cooling it.

5. A process as claimed in claim 4, **characterised in that** granulation is performed by hot face granulation and/or water ring granulation.

6. A process as claimed in any one claims 1-5, **characterised in that** the continuous kneading and extruding apparatus comprises a housing, the inner wall of which is provided with multiple protrusions, which cooperate with a rotating and simultaneously axially reciprocating kneading shaft with screw flights.

7. A process as claimed in any one of claims 1-6, **characterised in that** from 35-75, preferably from 40-60 % by weight with respect to the total mass of the masterbatch of intercalated clay is fed to the extruder.

8. A process as claimed in any one of claims 1-7, **characterised in that** as the phyllosilicate material use is made of a montmorillonite clay.

9. A process as claimed in any one of claims 1-8, **characterised in that** as the thermoplastic matrix polymer material use is made of a thermoplastic material selected from the group of polyolefines comprising lineair low density polyethylene (LLDPE), low density polyethylene (LDPE), high density polyethylene (HDPE), medium density polyethylene ' MDPE), polypropylene (PP) and their copolymers. Also ethylene venyl acetate (EVA), ethylene butyl acrylate (EBA), ethylene methyl acrylate (EMA), polyamide 6, polyamide 6.6, polyamide 4.6, polyamide 11, polyamide 12, polybutylene therephtalate (PBT), polyethylene therephtalate, polycarbonate (PC), acrylonytrile butadiene styrene (ABS), polymethyle methacrylate (PMMA), polyoxymethylene, polystyrene (PS) and its copolymers (syndiotactic polystyrene or SPS included), styrene acrylonitryle (SAN), styrene butadiene copolymers (SB copolymers), thermoplastic polyurethanes (TPU), maleic anhydride grafted polymers, ionomers, all thermoplastic elastomers and all combinations of 2 or more of the above polymers are suitable.

10. A process as claimed in any one of claims 1-9, **characterised in that** as the thermoplastic matrix polymer material use is made of a polyamide resin, a polyamide copolymer or a polyester resin or admixtures thereof.

11. A process as claimed in claim 10, **characterised in that** the polyamide copolymer is a polyamide - polybutylenethereftalate copolymer or a polyamide - polyethylenethereftalate copolymer.

12. A process for manufacturing a nanocomposite material comprising melt-kneading from 1-45% by weight of the masterbatch obtained by the process according to any one of claims 1-11, with a further matrix polymer material into the composition.

13. A process as claimed in claim 12, **characterised in that** the further matrix material is selected from the group of a polyamide, a polyamide copolymer or a polyester resin or a mixture of two or more of these resins.

14. A process for manufacturing a nanocomposite material composition which comprises melt-kneading from 1-30% by weight of the masterbatch obtained by the process according to any one of claims 1-11, with a further matrix polymer material into the composition.

15. A process as claimed in claim 14, **characterised in that** the further matrix polymer material is selected from the group of a polyamide and/or polyester resin.
